# EUROPÄISCHE PATENTSCHRIFT

(11) **EP 2 562 453 B1**
(45) Veröffentlichungstag und Bekanntmachung des Hinweises auf die Patenterteilung: **02.09.2015**
(21) Anmeldenummer: 12169856.7
(22) Anmeldetag: 29.05.2012
(51) Int. Cl.: F16K 31/06, B60T 8/36, F02M 63/00

(54) **Elektromagnetisch betätigbares Ventil**
Electromagnetically actuated valve
Soupape actionnée de manière électromagnétique

(30) Priorität: 18.07.2011 DE 102011079339
(43) Veröffentlichungstag der Anmeldung: 27.02.2013
(73) Patentinhaber: ROBERT BOSCH GMBH, 70442 Stuttgart (DE)
(72) Erfinder: Heyer, Klaus, 71691 Freiberg (DE); Kaestner, Frank, 74321 Bietigheim-Bissingen (DE); Alaze, Norbert, 71706 Markgroeningen (DE); Kratzer, Dietmar, 71732 Tamm (DE)

(56) Entgegenhaltungen:
- EP-B1- 1 232 082
- DE-A1- 4 244 444
- DE-A1- 10 311 486
- US-A- 3 653 630
- US-A- 5 033 505

## Beschreibung

Die Erfindung betrifft ein elektromagnetisch betätigbares Ventil gemäß Oberbegriff des Anspruchs 1.

### Stand der Technik

Derartige Ventile sind beispielsweise als Dosier- oder Einspritzventile aus dem Stand der Technik bekannt. So offenbart beispielsweise die europäische Patentschrift EP 1 232 082 B1 ein elektromagnetisch betätigbares Ventil mit einer Hülse, in der ein Magnetkern fest und ein ein Ventilelement betätigender Magnetanker axial verlagerbar angeordnet sind. Das Ventilelement wirkt dabei mit einer Ventilöffnung zum Verschließen oder Freigeben der Ventilöffnung zusammen und ist mit dem Magnetanker derart verbunden, dass es sich, wenn der Magnetanker von dem Magnetkern angezogen wird, von der Ventilöffnung löst und dadurch diese freigibt. Zwischen einer dem Magnetanker zugewandten Stirnfläche des Magnetkerns, die im Folgenden als Kernstirnfläche bezeichnet wird, und einer dem Magnetkern zugewandten Stirnfläche des Magnetankers, die im Folgenden Ankerstirnfläche genannt wird, ist dabei ein elastisch verformbares Federelement angeordnet. Das Federelement liegt somit in dem Luftspalt zwischen Magnetkern und Magnetanker und ist, spätestens wenn das Magnetventil betätigt wird, zwischen Magnetkern und Magnetanker verspannt. Häufig werden als Federelement Schraubenfedern vorgesehen, die eine lineare Kraft-Weg-Kennlinie zur Rückstellung des Magnetankers bereitstellen. Zur speziellen Gestaltung der Kraftcharakteristiken ist es aus der genannten Patentschrift auch bekannt, ein Federelement in Form einer Federscheibe direkt zwischen den Stirnflächen anzuordnen.

Aus den Offenlegungsschriften DE 42 44 444 A1 und US 3,653,630 A sind weitere Elektromagnetventile der Eingangs genannten Art bekannt. Aus der Offenlegungsschrift DE 103 11 486 A1 ist weiterhin ein Elektromagnetventil der Eingangs genannten Art bekannt, bei welchem in einer der Stirnflächen mehrere sich radial erstreckende Ausnehmungen ausgebildet sind.

### Offenbarung der Erfindung

Das erfindungsgemäße Ventil mit den Merkmalen des Anspruchs 1 hat den Vorteil, dass auf einfache Art und Weise die Kraft-Weg-Charakteristik des Federelements individuell anpassbar ist. Darüber hinaus lässt sich bei dem erfindungsgemäßen Ventil eine gezielte stabilisierende Ausrichtung des Ankers zum Polkern durch Erzeugung gezielter Querkraftkomponenten des Federelements erreichen. Das erfindungsgemäße Ventil zeichnet sich durch die Merkmale des Anspruchs 1 aus. Dabei ist vorgesehen, dass das Federelement und/oder die Stirnflächen des Magnetkerns und des Magnetankers, also die Ankerstirnfläche und/oder die Kernstirnfläche, derart ausgebildet sind, dass das Federelement mit einer der Stirnflächen wenigstens zwei voneinander beabstandete Auflagestellen bildet. Es ist somit also vorgesehen, dass das Federelement auf einer der Stirnflächen auf zwei Lagerstellen aufliegt, wodurch es ausreicht, auf der gegenüberliegenden Stirnfläche nur eine einzige Auflagestelle vorzusehen, um eine Federwirkung zu erhalten. Insbesondere erlauben es die dem Federelement zugeordneten Auflagestellen beziehungsweise Lagerstellen der entsprechenden Stirnfläche, dass mehrere Federelemente, insbesondere mit unterschiedlichen Kraft-Weg-Federcharakteristiken, nebeneinander vorgesehen werden können. Vorzugsweise sind die Auflagestellen derart angeordnet, dass eine Auflagestelle der einen Stirnfläche zwischen zwei Auflagestellen der gegenüberliegenden Stirnfläche liegt, wobei das Federelement vorzugsweise als Blattfeder zwischen den Stirnflächen ausgebildet ist.

Erfindüngsgemäß sind die Auflagestellen auf der einen Stirnfläche, die die mehreren Auflagestellen aufweist, radial beabstandet zueinander angeordnet. Der Begriff radial ist hierbei im Bezug auf die Zentralachse des Ventils beziehungsweise der Hülse des Ventils zu verstehen. Hierbei wird erreicht, dass eine innen liegende Auflagestelle sowie eine radial weiter außen liegende Auflagestelle geboten werden, auf denen das Federelement aufliegt. Weisen die Auflagestellen darüber hinaus unterschiedliche Höhen auf, lässt sich eine gezielte Querkraftkomponente erreichen, die zur Zentrierung und Führung des Magnetankers in der Hülse nutzbar ist.

Gemäß einer bevorzugten Ausführungsform der Erfindung ist vorgesehen, dass die Auflagestellen im Wesentlichen durch die Form des Federelements definiert werden. So ist beispielsweise vorgesehen, dass das Federelement U-förmig als Blattfeder ausgebildet ist, sodass es mittig mit einer Stirnfläche eine erste Anlagestelle und an seinen beiden freien Enden jeweils eine weitere Anlagestelle an der anderen Stirnfläche beidseitig der mittigen Anlagestelle beziehungsweise Auflagestelle bildet. Das Federelement ist vorzugsweise blattfederförmig ausgebildet, wobei es besonders bevorzugt eine kreisring- oder kreisringsegmentförmige Kontur aufweist. Gemäß einer alternativen Ausführungsform ist bevorzugt vorgesehen, dass das Federelement ringscheibenförmig ausgebildet und insbesondere koaxial zur Bewegungsachse des Magnetankers angeordnet ist. Das ringscheibenförmige Federelement kann also koaxial oder auch dezentral bezüglich der Ventilachse zwischen Magnetkern und Magnetanker angeordnet sein. Die jeweilige Auflagestelle ist dabei vorzugsweise ebenfalls ringförmig, insbesondere kreisringförmig und insbesondere koaxial zur Ventilachse ausgebildet beziehungsweise ausgerichtet. Besonders bevorzugt werden die beiden voneinander beabstandeten Auflagestellen auf einer der Stirnflächen zumindest durch eine Vertiefung in der Stirnfläche zwischen den Auflagestellen gebildet. Die Vertiefung kann dabei beispielsweise als Ringnut ausgebildet sein. Gemäß einer bevorzugten Ausführungsform sind jedoch mehrere insbesondere ringsegmentscheibenförmige Federelemente vorgesehen, die beabstandet zueinander über den Umfang der Stirnflächen verteilt angeordnet sind. Die Stirnflächen und/oder die Federelemente sind dabei entsprechend derart ausgebildet, dass jedes der Federelemente mit zumindest einer der Stirnflächen wenigstens zwei voneinander beabstandete Auflagestellen bildet.

Vorzugsweise sind die mehreren Federelemente gleichmäßig beabstandet, insbesondere symmetrisch, verteilt angeordnet und/oder ausgebildet. So ist es beispielsweise denkbar, zwei, drei, vier oder mehr Federelemente vorzusehen, die gleichmäßig über den Umfang verteilt angeordnet sind, sodass insbesondere gegebenenfalls erzeugte Querkräfte ebenfalls gleichmäßig eingeleitet werden, sodass verhindert wird, dass der Magnetanker seitlich gegen die Hülse gedrückt wird.

Gemäß einer vorteilhaften Weiterbildung der Erfindung ist vorgesehen, dass zum Bilden der Auflagestellen eine der Stirnflächen zwei erste Erhebungen und die andere der Stirnflächen wenigstens eine zweite Erhebung aufweist, wobei die zweite Erhebung zwischen den ersten Erhebungen liegt. Wie oben bereits erwähnt, wird hierdurch eine Beanspruchung des Federelements im Sinne einer Blattfeder erreicht. Vorzugsweise ist dabei das jeweilige Federelement entsprechend blattförmig, besonders bevorzugt eben ausgebildet. Das jeweilige Federelement ist dabei zwischen den Erhebungen der Stirnflächen im Ausgangszustand vorzugsweise vorgespannt gehalten, und wird bei einer Betätigung des Ventils durch die erste Erhebung in den Zwischenraum zwischen den zweiten Erhebungen unter elastischer Verformung eingedrückt.

Weiterhin ist insbesondere vorgesehen, dass zumindest eine der Stirnflächen Mittel zum Ausrichten beziehungsweise Arretieren des jeweiligen Federelements aufweist. Insbesondere sollen die Mittel ein Ausrichten/Arretieren des Federelements bereits bei der Montage erlauben, sodass das Federelement zunächst auf den Magnetanker oder Magnetkern aufgebracht und anschließend zusammen mit dem Magnetanker oder Magnetkern in die Hülse eingeschoben wird, und dort zumindest so lange in seiner Stelle an dem Magnetanker oder Magnetkern verbleibt, bis auch der Magnetkern beziehungsweise Magnetanker in die Hülse eingeschoben und das Federelement zwischen beiden in einer Neutralstellung vorgespannt und dadurch gehalten ist.

Besonders bevorzugt weisen die Mittel Elemente zum formschlüssigen Halten des jeweiligen Federelements auf. Insbesondere ist dabei vorgesehen, dass die Mittel wenigstens einen Haltevorsprung umfassen, an dem das jeweilige Federelement umfangsseitig anliegt. So ist es beispielsweise denkbar, an dem Magnetanker einen oder mehrere Haltevorsprünge vorzusehen, die von der Ankerstirnfläche vorstehen, und an denen das entsprechende Federelement anliegt. Besonders bevorzugt sind mindestens drei Haltevorsprünge vorgesehen, die das Federelement in seiner Lage halten. Natürlich können zwei oder mehr Haltevorsprünge auch einstückig miteinander ausgebildet sein beziehungsweise ineinander übergehen, sodass beispielsweise wenigstens ein Haltevorsprung vorliegt, der mit zwei Seiten des blattförmigen Federelements zusammenwirkt. Besonders bevorzugt ist jeder der Seiten des blattförmigen Federelements ein Haltevorsprung zugeordnet.

Damit der Magnetanker im Betrieb möglichst nahe an den Magnetkern bewegbar ist, um einen möglichst großen Ventilhub und einen möglichst kleinen Spalt zu gewährleisten, ist vorzugsweise in der dem wenigstens einen Haltevorsprung gegenüberliegenden Stirnfläche mindestens eine Vertiefung ausgebildet, in welche der jeweilige Haltevorsprung der anderen Stirnfläche bei einer Betätigung des Ventils eindringt. Die Mittel umfassen hierbei also sowohl den mindestens einen Haltevorsprung sowie die mindestens eine damit zusammenwirkende Vertiefung. Der Haltevorsprung kann somit zumindest bereichsweise in die Vertiefung eindringen, sodass weiterhin ein größtmöglicher Ventilhub gewährleistet wird.

Weiterhin ist bevorzugt vorgesehen, dass die zwei ersten Erhebungen eine Auflageebene bilden, die schräg bezüglich der Bewegungsachse des Magnetankers ausgerichtet ist. Wie bereits erwähnt, werden durch entsprechend unterschiedlich hohe Auflagestellen, die vorliegend durch unterschiedlich hohe erste Erhebungen gebildet werden, insbesondere bei blattförmigen Federelementen Querkräfte im Betrieb erzeugt, die zur Führung und Stabilisierung des Magnetankers dienen. Ferner kann auch vorgesehen sein, dass die im Übrigen vorzugsweise parallel zueinander verlaufenden Stirnflächen von Magnetanker und Magnetkern derart komplementär ausgebildet sind, dass der Magnetkern eine im Wesentlichen konkave und der Magnetanker eine im Wesentlichen konvexe - oder anders herum - Stirnfläche aufweist.

Im Folgenden soll die Erfindung anhand der Zeichnung näher erläutert werden. Dazu zeigen
- Figur 1: ein elektromagnetisch betätigbares Ventil in einer Längsschnittdarstellung,
- Figur 2: Detailansichten des Ventils mit mehreren Auflagestellen für ein Federelement zwischen Magnetanker und Magnetkern,
- Figur 3: Mittel zum Halten eines ringscheibensegmentförmigen Federelements und
- Figur 4: Haltevorsprünge sowie Vertiefungen der Mittel zum Halten des ringscheibensegmentförmigen Federelements in einer vereinfachten Schnittdarstellung.

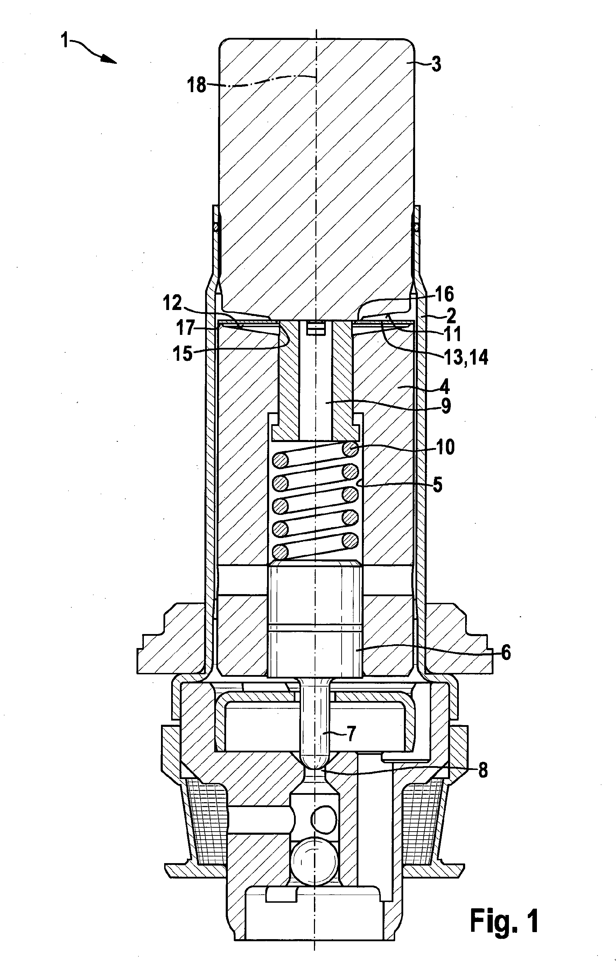

Figur 1 zeigt in einer Längsschnittdarstellung ein elektromagnetisch betätigbares Ventil 1, das insbesondere in Kraftfahrzeugen verbaubar ist. Das Ventil 1 weist eine im Wesentlichen zylinderförmige Hülse 2 auf, welche an einem Ende einen Magnetkern 3 trägt, der fest mit der Hülse 2 verbunden ist. Dem Magnetkern 3 ist eine hier nicht näher dargestellte Spule zugeordnet, durch deren Bestromung der Magnetkern 3 einen in der Hülse axial verlagerbar angeordneten Magnetanker 4 anzieht.

Der Magnetanker 4 weist eine gestufte Durchgangsbohrung 5 auf, in welcher an der dem Magnetkern 3 abgewandten Seite ein Ventilelement 6 gehalten ist, das eine Ventilspitze 7 aufweist, die mit einem Ventilsitz beziehungsweise mit einer Ventilöffnung 8 zum Verschließen oder Freigeben eines Durchströmungsquerschnitts zusammenwirkt. In der Durchbohrung 5 ist weiterhin ein axial verlagerbares Druckstück 9 gehalten, das einendig von einem als Schraubenfeder 10 ausgebildeten Federelement beaufschlagt ist, welches sich einendig an dem Ventilelement 6 abstützt, und anderendig an dem Magnetkern 3. Der Magnetkern 3 weist hierbei eine dem Magnetanker 4 zugewandte, rotationssymmetrische Kernstirnfläche 11 auf, und der Magnetanker 4 eine dem Magnetkern 3 zugewandte, rotationssymmetrische Ankerstirnfläche 12. Das Druckstück 9 ragt über die Ankerstirnfläche 12 hinaus und liegt an der Kernstirnfläche 11 mittig an.

Zwischen dem Magnetkern 3 und dem Magnetanker 4 ist ein weiteres, elastisch verformbares Federelement 13 vorgesehen, das vorliegend als rotationssymmetrische Scheibenfeder 14 ausgebildet und zwischen der Kernstirnfläche 11 und der Ankerstirnfläche 12 verspannt beziehungsweise vorgespannt gehalten ist. In der dargestellten Ausgangsstellung, also im unbetätigten Zustand, muss das Federelement 13 jedoch nicht unbedingt vorgespannt beziehungsweise verspannt gehalten sein. Die Ausbildung kann gemäß einer alternativen Ausführungsform auch derart erfolgen, dass das Federelement 13 erst bei Betätigung des Ventils 1 zwischen den beiden Stirnflächen 11 und 12 verspannt wird. Die Scheibenfeder 14 weist mittig eine Öffnung 15 auf, durch welche das Druckstück 9 hindurchragt, um an der Kernstirnfläche 11 anzuliegen.

Die Kernstirnfläche 11 weist dabei mittig einen Bereich auf, in welchem sich die Kernstirnfläche 11 senkrecht zur Achse des Ventils 1 erstreckt, und auf welcher das Druckstück 9 aufliegt. Dieser Bereich weist einen Radius auf, der über das Druckstück 9 hinausgeht und somit eine Auflagefläche für die Scheibenfeder 14 bildet. Der Magnetanker 4 weist an seiner Ankerstirnfläche 12 einen Außenbereich auf, in welchem die Ankerstirnfläche 12 ebenfalls im Wesentlichen senkrecht zur Achse 18 des Ventils (durch eine Strich-Punkt-Linie angedeutet) ausgerichtet ist. Dieser Bereich ist dabei ringförmig ausgebildet und liegt am äußersten Rand der Ankerstirnfläche 12. Auf diesem Bereich liegt die Scheibenfeder 14 mit ihrem äußeren Randbereich auf. Die Scheibenfeder 14 bildet somit mit dem Magnetanker 4 und dem Magnetkern 3 jeweils eine Auflagestelle 16 beziehungsweise 17, die in dem vorliegenden Ausführungsbeispiel als ringförmige Auflageflächen ausgebildet sind. Im Übrigen sind die Kernstirnfläche 11 und die Ankerstirnfläche 12 in Radialerstreckung, also ausgehend von der Achse des Ventils 1, schräg verlaufend ausgebildet, wobei die schräg verlaufenden Bereiche im Wesentlichen parallel zueinander verlaufen, sodass die Kernstirnfläche 11 und die Ankerstirnfläche 12 insoweit komplementär ausgebildet sind.

Im Betrieb, wenn das Magnetventil bestromt beziehungsweise betätigt wird, zieht der Magnetkern 3 den Magnetanker 4 an, wodurch die dazwischen verspannt gehaltene Scheibenfeder 14 verformt wird und dadurch eine Federkraft erzeugt, die zwischen Magnetkern 3 und Magnetanker 4 wirkt. Alternativ zu dem dargestellten Ausführungsbeispiel kann das Ventil 1 auch ohne die Schraubenfeder 10 und das Druckstück 9 ausgebildet sein.

Wie aus Figur 1 ersichtlich und obenstehend beschrieben, bildet das Federelement 13 mit der Ankerstirnfläche 12 und der Kernstirnfläche 11 jeweils eine Auflagestelle 16 beziehungsweise 17.

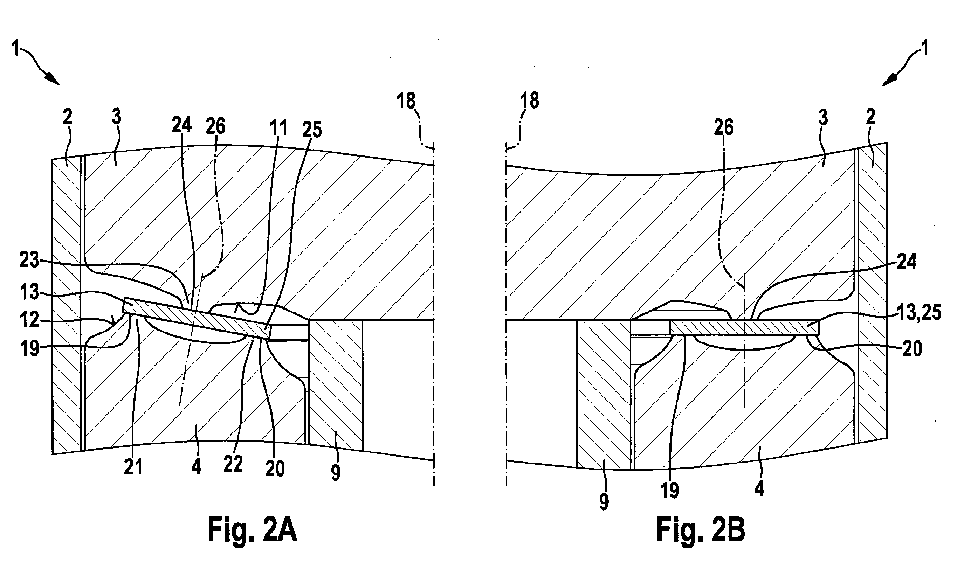

Figur 2 zeigt zwei vorteilhafte Weiterbildungen des Ventils 1, wobei Figur 2A ein erstes Ausführungsbeispiel und Figur 2B ein zweites Ausführungsbeispiel zeigen, bei welchen jeweils das Federelement 13 mit der Ankerstirnfläche zwei Auflagestellen 19 und 20 bildet. Hierzu weist die Ankerstirnfläche 12 zwei beabstandet zueinander angeordnete Erhebungen 21 beziehungsweise 22 auf, auf welchen das Federelement 13 aufliegt. Die Kernstirnfläche 11 weist eine Erhebung 23 auf, an welcher das Federelement 13 anliegt und dadurch eine weitere Auflagestelle 24 bildet. Die Erhebungen 21 und 22 sind dabei radial bezüglich der Achse 18 des Ventils 1 voneinander beabstandet, wobei die Erhebung 23 radial zwischen den Erhebungen 21 und 22 liegt, und insofern das Federelement 13 vorzugsweise mittig beaufschlagt.

Das Federelement 13 kann dabei, wie bisher auch, als ringförmige Scheibenfeder 14 ausgebildet sein, ist in dem vorliegenden Ausführungsbeispiel jedoch als zumindest im Wesentlichen flache Blattfeder 25 ausgebildet, die eine kreisringsegmentförmige Kontur aufweist, sodass sich das Federelement 13 nur bereichsweise über den Umfang der jeweiligen Ankerstirnfläche 11 beziehungsweise 12 erstreckt. Ebenso ist es denkbar, anstelle der kreisringsegmentförmigen Blattfeder 25 eine Scheibenfeder vorzusehen, deren Rotationsachse 26 beabstandet beziehungsweise exzentrisch zur Ventilachse 18 ausgerichtet ist, sodass die Scheibenfeder vollständig neben der Achse 18 beziehungsweise zwischen Druckstück 9 und Hülse 2 liegt.

Die Ausführungsbeispiele der Figuren 2A und 2B unterscheiden sich dahingehend, dass gemäß Figur 2A die Rotationsachse 26 beziehungsweise die Blattfeder 25 schräg bezüglich der Achse 18 des Ventils 1 ausgerichtet ist, während gemäß Figur 2B die Rotationsachse 26 parallel zur Achse 18 verläuft, beziehungsweise die Blattfeder 25 in einer Ebene senkrecht zur Achse 18 des Ventils liegt.

Das Ausführungsbeispiel gemäß Figur 2B erlaubt einen einfachen und kostengünstigen Aufbau, während die Schrägstellung des Federelements 13 gemäß dem Ausführungsbeispiel der Figur 2A außerdem zur Dämpfung beziehungsweise Stabilisierung des Magnetankers 4 im Betrieb des Ventils 1 dient.

Vorzugsweise sind jeweils mehrere dieser Federelemente 13 gleichmäßig symmetrisch oder asymmetrisch über den Umfang verteilt angeordnet, wobei jedes der Federelemente 13 an der Ankerstirnfläche entsprechend zwei Auflagestellen 21, 22 bildet. Hierzu sind entsprechende Erhebungen 21 beziehungsweise 22 an der Ankerstirnfläche 12 vorgesehen. Bevorzugt sind die Erhebungen 21, 22 und 23 ringförmig ausgebildet, sodass sie sich über den gesamten Umfang der jeweiligen Stirnfläche 11, 12 erstrecken. Natürlich ist es auch denkbar, die mehreren Auflageflächen an der Kernstirnseite 11 und nur einer Auflagestelle an der Ankerstirnfläche 12 vorzusehen. Anstelle von den benachbarten Erhebungen 21 und 22 ist es ebenfalls denkbar, in der entsprechenden Stirnfläche eine Vertiefung auszubilden, in welche das jeweilige Federelement 13 durch seine elastische Verformung bereichsweise einbringbar ist. Insbesondere kann vorgesehen sein, eine Ringnut vorzusehen, die sich über den gesamten Umfang der Ankerstirnfläche 12 oder der Kernstirnfläche 11 erstreckt. Ebenso können mehrere, jeweils einem Federelement 13 zugeordnete Vertiefungen in Umfangsrichtung vorgesehen sein, die beispielsweise kugelabschnittsförmig ausgebildet sind.

Sind mehrere Federelemente 13 vorgesehen, so sind diese vorzugsweise gleich ausgebildet, um insbesondere eine Kostenersparnis bei der Fertigung zu erreichen. Gemäß einer alternativen Ausführungsform unterscheiden sich zumindest zwei der mehreren Federelemente in ihrer Steifigkeit, ihrer Kontur und/oder in ihren Abmessungen zueinander, zum Beispiel um das Verhalten des Ventils 1 im Betrieb günstig einzustellen, also um eine gewünschte Kraft-Weg-Kennlinie vorzugeben, oder um als Toleranzausgleich zu wirken.

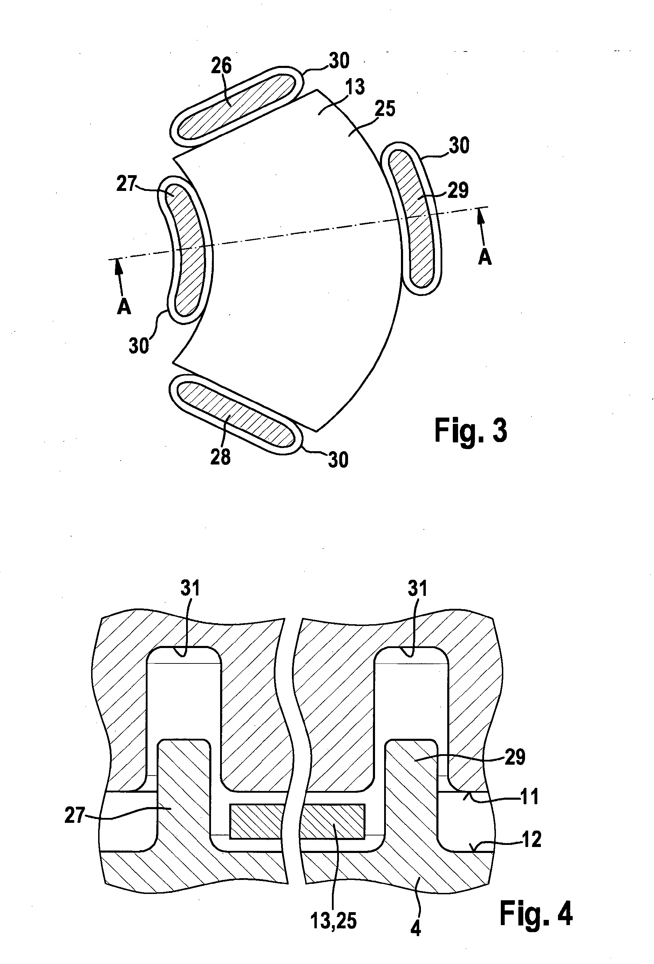

Um die Montage zu erleichtern und um eine sichere Anordnung des einen oder der mehreren Federelemente 13 im Betrieb zu ermöglichen, weist das Ventil vorzugsweise Mittel zum Ausrichten und/oder Arretieren der Federelemente 13 auf. Figuren 3 und 4 zeigen hierzu in einer Draufsicht eine Anordnung beziehungsweise Arretierung für eine kreisringsegmentförmige Blattfeder 25 in einer Draufsicht auf die hier nicht näher dargestellte Ankerstirnfläche 12. Die Erhebungen 21 und 22 sind hierbei nicht zu erkennen, da sie unterhalb der Blattfeder 25 liegen. Die Mittel umfassen vorliegend vier Haltevorsprünge 26, 27, 28 und 29, die so viel höher als die Erhebungen 21, 22 ausgebildet sind, dass sie die Blattfeder 25 überragen. Dabei sind die Haltevorsprünge 26 bis 29 derart geformt und angeordnet, dass die Blattfeder 25 umfangsseitig, also mit ihrem Außenrand, an den Haltevorsprüngen anliegt. Hierdurch wird die Blattfeder 25 formschlüssig in ihrer Position auf der Ankerstirnfläche 12 gehalten. Gemäß dem vorliegenden Ausführungsbeispiel sind die Haltevorsprünge 26 bis 29 zusätzlich von einer Dämpfungsschicht beziehungsweise einer Dämpfungshülse 30 umgeben, die elastisch verformbar ist und vorzugsweise aus einem Gummi besteht, um insbesondere eine Geräuschentwicklung im Betrieb zu vermeiden. Natürlich wäre es auch denkbar, dass beispielsweise die Haltevorsprünge 26 und 27 und die Haltevorsprünge 29 und 30 jeweils ineinander übergehen und somit Halteecken für die Blattfeder 25 bilden.

Aus Figur 3 ist darüber hinaus ersichtlich, dass die Erhebungen 21, 22 nicht unbedingt radial zueinander beabstandet sein müssen, sondern auch in Umfangsrichtung zueinander beabstandet angeordnet sein können, aber auf dem gleichen Radius liegen, wobei dann die Erhebung 23 in Umfangsrichtung gesehen vorzugsweise auf dem gleichen Radius zwischen den Erhebungen 21 und 22 liegt, um die Elastizität des Federelements 13 als Federkraft zu nutzen. Natürlich ist es auch denkbar, dass nicht alle Haltevorsprünge 26 bis 29 von einer der Stirnflächen 11, 12 ausgehen. Vielmehr ist es auch denkbar, dass beispielsweise die Haltevorsprünge 27 und 29 von der Ankerstirnfläche 12 und die Haltevorsprünge 26 und 28 von der Kernstirnfläche 11 ausgehen beziehungsweise gebildet werden. Die Haltevorsprünge 26 bis 29 können prinzipiell einteilig aus dem Werkstoff des Ankers 4 beziehungsweise des Polkerns 3 ausgebildet sein, oder als separates Bauteil, beispielsweise aus geformtem Blechmaterial, an die jeweilige Stirnfläche 11, 12 montiert, insbesondere eingedrückt worden sein. Die Haltevorsprünge 26 bis 29 können dabei als Stege, wie in Figur 3 dargestellt, ausgebildet sein, oder auch als Zapfen mit einer insbesondere runden Querschnittsform.

Bei der Montage wird das Federelement 13 zwischen die Haltevorsprünge 26 bis 29 gelegt, und anschließend mitsamt dem Anker 4 in die Hülse 2 eingeschoben. Durch die Erhebung 23 wird verhindert, dass im Betrieb das jeweilige Federelement 13 aus der durch die Haltevorsprünge 26 bis 29 gebildeten Haltevorrichtung herausrutschen kann.

Figur 4 zeigt eine Querschnittsdarstellung entlang der Linie B-B aus Figur 3. Gezeigt sind dabei die Haltevorsprünge 27 und 29, der Ankerstirnfläche 12 sowie komplementär dazu ausgebildete Vertiefungen 31 in der Kernstirnfläche 11. Zweckmäßigerweise sind allen Haltevorsprüngen 26 bis 29 derartige Vertiefungen 31 zugeordnet, die es erlauben, dass die Haltevorsprünge 26 bis 29 in die Vertiefungen 31 zumindest bereichsweise eindringen, wenn das Ventil betätigt und der Magnetanker 4 in Richtung des Magnetkerns 3 gezogen wird.

Hierdurch wird erreicht, dass trotz Vorsehen der formschlüssigen Haltevorrichtung ein maximaler Ventilhub und ein minimaler Luftspalt gewährleistet werden.

## Patentansprüche

1. Elektromagnetisch betätigbares Ventil (1), insbesondere Einspritzventil oder Dosierventil für ein Kraftfahrzeug, mit einer Hülse (2), in der ein Magnetkern (3) fest und ein ein Ventilelement (6) betätigender Magnetanker (4) axial verlagerbar angeordnet sind, wobei zwischen einer dem Magnetanker (4) zugewandten Kernstirnfläche (11) des Magnetkerns (3) und einer dem Magnetkern (3) zugewandten Ankerstirnfläche (12) des Magnetankers (4) mindestens ein elastisch verformbares Federelement (13) angeordnet ist, **dadurch gekennzeichnet, dass** das Federelement (13) und die Stirnflächen (11,12) derart ausgebildet sind, dass das Federelement (13) mit zumindest einer der Stirnflächen (11,12) wenigstens zwei radial voneinander beabstandete Auflagestellen bildet, wobei eine Auflagestelle der einen Stirnfläche (11,12) zwischen zwei Auflagestellen der gegenüberliegenden Stirnfläche (12,11) liegt.

2. Ventil nach Anspruch 1, **dadurch gekennzeichnet, dass** das Federelement (13) ringscheibenförmig ausgebildet und insbesondere koaxial zur Bewegungsachse (18) des Magnetankers (4) angeordnet ist.

3. Ventil nach einem der vorhergehenden Ansprüche, **dadurch gekennzeichnet, dass** mehrere insbesondere ringsegmentscheibenförmige Federelemente (13) vorgesehen sind, die beabstandet zueinander insbesondere über den Umfang der Stirnflächen (11,12) verteilt angeordnet sind.

4. Ventil nach Anspruch 3, **dadurch gekennzeichnet, dass** die mehreren Federelemente (13) gleichmäßig beabstandet zueinander, insbesondere symmetrisch, angeordnet/ausgebildet sind.

5. Ventil nach einem der vorhergehenden Ansprüche, **dadurch gekennzeichnet, dass** zum Bilden der Auflagestellen (19,20,21) eine der Stirnflächen (12) zwei erste Erhebungen (21,22) und die andere der Stirnflächen (11) wenigstens eine zweite Erhebung (23) aufweist, wobei die zweite Erhebung zwischen den ersten Erhebungen liegt.

6. Ventil nach einem der vorhergehenden Ansprüche, **dadurch gekennzeichnet, dass** zumindest eine der Stirnflächen (11,12) Mittel zum Ausrichten/Arretieren des jeweiligen Federelements (13) aufweist

7. Ventil nach Anspruch 6, **dadurch gekennzeichnet, dass** die Mittel wenigstens einen Haltevorsprung (26-29) umfassen, an dem das jeweilige Federelement (13) umfangsseitig anliegt.

8. Ventil nach Anspruch 7, **dadurch gekennzeichnet, dass** die Mittel wenigstens eine Vertiefung (31) umfassen, in welche der jeweilige Haltevorsprung (26-29) bei einer Betätigung des Ventils (1) eindringt.

9. Ventil nach Anspruch 5, **dadurch gekennzeichnet, dass** die zwei ersten Erhebungen (21,22) eine Auflageebene bilden, die schräg bezüglich der Bewegungsachse (18) des Magnetankers ausgerichtet ist.

## Claims

1. Electromagnetically actuated valve (1), in particular injection valve or metering valve for a motor vehicle, having a sleeve (2) in which a magnet core (3) is arranged in a fixed fashion and a magnet armature (4) which actuates a valve element (6) is arranged in an axially movable fashion, wherein at least one elastically deformable spring element (13) is arranged between a core end face (11), facing the magnet armature (4), of the magnet core (3) and an armature end face (12), facing the magnet core (3), of the magnet armature (4), **characterized in that** the spring element (13) and the end faces (11, 12) are embodied in such a way that the spring element (13) forms, with at least one of the end faces (11, 12), at least two support points which are spaced apart from one another radially, wherein a support point of the one end face (11, 12) lies between two support points of the opposite end face (12, 11).

2. Valve according to Claim 1, **characterized in that** the spring element (13) is embodied in the form of an annular disk and is arranged, in particular, co-axially with respect to the movement axis (18) of the magnet armature (4).

3. Valve according to one of the preceding claims, **characterized in that** a plurality of, in particular, annular-segment-disk-shaped, spring elements (13) are provided which are arranged spaced apart from one another, in particular distributed over the circumference of the end faces (11, 12).

4. Valve according to Claim 3, **characterized in that** the plurality of spring elements (13) are arranged/embodied spaced apart from one another uniformly, in particular symmetrically.

5. Valve according to one of the preceding claims, **characterized in that** in order to form the support points (19, 20, 21), one of the end faces (12) has two first elevated portions (21, 22) and the other of the end faces (11) has at least a second elevated portion (23), wherein the second elevated portion lies between the first elevated portions.

6. Valve according to one of the preceding claims, **characterized in that** at least one of the end faces (11, 12) has means for orienting/arresting the respective spring element (13).

7. Valve according to Claim 6, **characterized in that** the means comprise at least one securing projection (26-29) against which the respective spring element (13) bears on the circumferential side.

8. Valve according to Claim 7, **characterized in that** the means comprise at least one depression (31) into which the respective securing projection (26-29) penetrates when the valve (1) is actuated.

9. Valve according to Claim 5, **characterized in that** the two first elevated portions (21, 22) form a support plane which is oriented obliquely with respect to the movement axis (18) of the magnet armature.

## Revendications

1. Vanne (1) pouvant être actionnée de manière électromagnétique, notamment vanne d'injection ou vanne de dosage pour un véhicule automobile, comprenant une douille (2) dans laquelle un noyau magnétique (3) est disposé en position fixe et un induit magnétique (4) actionnant un élément de vanne (6) est disposé de manière à pouvoir se déplacer dans le sens axial, au moins un élément ressort (13) déformable par effet élastique étant disposé entre une surface frontale de noyau (11) du noyau magnétique (3) faisant face à l'induit magnétique (4) et une surface frontale d'induit (12) de l'induit magnétique (4) faisant face au noyau magnétique (3), **caractérisée en ce que** l'élément ressort (13) et les surfaces frontales (11, 12) sont configurés de telle sorte que l'élément ressort (13) forme avec au moins l'une des surfaces frontales (11, 12) au moins deux points d'appui espacés l'un de l'autre dans le sens radial, un point d'appui d'une surface frontale (11, 12) se trouvant entre deux points d'appui de la surface frontale (12, 11) opposée.

2. Vanne selon la revendication 1, **caractérisée en ce que** l'élément ressort (13) est configuré en forme de disque annulaire et est notamment disposé de manière coaxiale par rapport à l'axe de déplacement (18) de l'induit magnétique (4).

3. Vanne selon l'une des revendications précédentes, **caractérisée en ce qu'**il existe plusieurs éléments ressorts (13) notamment en forme de disques de segments d'anneau, lesquels sont disposés espacés les uns des autres et notamment distribués sur la circonférence des surfaces frontales (11, 12).

4. Vanne selon la revendication 3, **caractérisée en ce que** les plusieurs éléments ressorts (13) sont disposés/configurés avec un espacement régulier entre eux, notamment de manière symétrique.

5. Vanne selon l'une des revendications précédentes, **caractérisée en ce que** pour former les points d'appui (19, 20, 21), l'une des surfaces frontales (12) possède deux premiers bossages (21, 22) et l'autre des surfaces frontales (11) possède au moins un deuxième bossage (23), le deuxième bossage se trouvant entre les premiers bossages.

6. Vanne selon l'une des revendications précédentes, **caractérisée en ce qu'**au moins l'une des surfaces frontales (11, 12) possède des moyens pour aligner/bloquer l'élément ressort (13) correspondant.

7. Vanne selon la revendication 6, **caractérisée en ce que** les moyens comprennent au moins un élément en saillie d'arrêt (26-29) sur lequel l'élément ressort (13) correspondant repose du côté du pourtour.

8. Vanne selon la revendication 7, **caractérisée en ce que** les moyens comprennent au moins un enfoncement (31) dans lequel pénètre l'élément en saillie d'arrêt (26-29) correspondant lors d'un actionnement de la vanne (1).

9. Vanne selon la revendication 5, **caractérisée en ce que** les deux premiers bossages (21, 22) forment un plan d'appui qui est orienté en biais par rapport à l'axe de déplacement (18) de l'induit magnétique.
